# EUROPEAN PATENT APPLICATION

(11) **EP 3 962 005 A1**
(43) Date of publication of application: **02.03.2022**
(21) Application number: 20861335.6
(22) Date of filing: 22.08.2020
(51) Int. Cl.: H04L 12/801

(54) **METHOD, APPARATUS, AND DEVICE FOR BLOCKING SIGNALING STORM, AND STORAGE MEDIUM**

(30) Priority: 03.09.2019 CN 201910829015
(71) Applicant: Huawei Technologies Co., Ltd., Shenzhen, Guangdong 518129 (CN)
(72) Inventor: CAI, Yudong, Shenzhen, Guangdong 518129 (CN)
(74) Representative: Körber, Martin Hans
(86) International application number: PCT/CN2020/110662
(87) International publication number: WO 2021/043012

(57) **Abstract**

Embodiments of this application provide a signaling storm blocking method, apparatus, and device, and a storage medium, and belong to the field of network technologies. The method includes: obtaining traffic statistics information, where the traffic statistics information is statistics and output information of a traffic performance indicator; detecting a signaling storm based on the traffic statistics information; when the signaling storm is detected, obtaining a call history record CHR log of at least one user equipment UE, where the CHR log is a log file used to record a problem that occurs in a call process of a user; determining a target UE based on the CHR log of the at least one UE, where the target UE is a UE that generates signaling causing the signaling storm; and performing signaling blocking on the target UE. The signaling storm is detected by using the traffic statistics information. When the signaling storm is detected, the target UE that generates the signaling causing the signaling storm is determined based on the CHR log of the UE, and signaling blocking is performed on the target UE. In this way, the signaling storm is more accurately blocked and a blocking effect is improved.

## Description

This application claims priority to Chinese Patent Application No. 201910829015.1, filed with the China National Intellectual Property Administration on September 3, 2019 and entitled "SIGNALING STORM BLOCKING METHOD, APPARATUS, AND DEVICE, AND STORAGE MEDIUM", which is incorporated herein by reference in its entirety.

### TECHNICAL FIELD

This application relates to the field of communications technologies, and further relates to application of artificial intelligence (Artificial Intelligence, AI) in the field of communications technologies, and in particular, to a signaling storm blocking method, apparatus, and device, and a storage medium.

### BACKGROUND

As there are more terminals, data services are significantly growing, and service requirements are increasingly diversified, there are demands for short delay, fast speed, and large traffic. If a quantity of terminal signaling requests received by a wireless network device (for example, a mobility management entity function (mobility management entity function, MME) or an evolved NodeB (evolved NodeB, eNodeB)) exceeds a capability of processing all signaling by the wireless network device, network congestion is caused or even an avalanche effect is generated, and consequently the network is unavailable. This case is referred to as a signaling storm.

In a related technology, traffic is controlled by setting a central processing unit (Central Processing Unit, CPU) resource occupancy rate threshold/a signaling amount threshold per unit time in the wireless network device, to block a signaling storm. However, this control manner only provides system protection on signaling overload, a manner of blocking the signaling storm is not precise, and a blocking effect is poor.

### SUMMARY

Embodiments of this application provide a signaling storm blocking method, apparatus, and device, and a storage medium, to resolve a problem provided by a related technology. Technical solutions are as follows:

According to a first aspect, a signaling storm blocking method is provided. The method includes: obtaining traffic statistics information, where the traffic statistics information is statistics and output information of a traffic performance indicator; detecting a signaling storm based on the traffic statistics information; when the signaling storm is detected, obtaining a call history record CHR log of at least one user equipment UE, where the CHR log is a log file used to record a problem that occurs in a call process of a user; determining a target UE based on the CHR log of the at least one UE, where the target UE is a UE that generates signaling causing the signaling storm; and performing signaling blocking on the target UE.

The signaling storm is detected based on the traffic statistics information. When the signaling storm is detected, the target UE that generates the signaling causing the signaling storm is determined based on the CHR log of the UE, and signaling blocking is performed on the target UE. In this way, the signaling storm is more accurately blocked and a blocking effect is improved.

In an example embodiment, the performing signaling blocking on the target UE includes: detecting a false source in the target UE to obtain the false source in the target UE, where the false source is a UE that performs communication by using a false address; and performing signaling blocking on the false source in the target UE by using a blocking policy of a first priority, and performing signaling blocking on a non-false source in the target UE by using a blocking policy of a second priority, where the first priority is higher than the second priority.

Whether the determined target UE is a false source is further determined, to perform blocking by using different priorities, thereby further improving a blocking effect.

In an example embodiment, the detecting a false source in the target UE to obtain the false source in the target UE includes: obtaining an international mobile subscriber identity IMSI of the target UE, paging the target UE based on the IMSI of the target UE, and determining the false source in the target UE based on a paging result.

In an example embodiment, the traffic statistics information includes one or more of a traffic statistics log of a base station that is reported by the base station and a traffic statistics log that is of a core network and that is reported by a core network device.

The CHR log of the at least one UE includes one or more of a signaling log that is of the at least one UE and that is reported by the base station and a signaling log that is of the at least one UE and that is reported by the core network device.

In an example embodiment, the CHR log of the at least one UE further includes an alarm log that is of the at least one UE and that is reported by a flow probe.

In an example embodiment, the determining a target UE based on the CHR log of the at least one UE includes: extracting a feature from the CHR log of the at least one UE; obtaining, through analysis based on the extracted feature, a behavior feature sequence corresponding to each UE in the at least one UE; identifying, by using a neural network model, the behavior feature sequence corresponding to each UE in the at least one UE; and using, when an abnormal behavior feature sequence is identified, a UE corresponding to the abnormal behavior feature sequence as the target UE, where the neural network model is obtained through training by using the behavior feature sequence corresponding to a normal UE.

In an example embodiment, after the using, when an abnormal behavior feature sequence is identified, a UE corresponding to the abnormal behavior feature sequence as the target UE, the method further includes: when target UEs corresponding to a plurality of abnormal behavior feature sequences exist, associating the target UEs corresponding to the plurality of abnormal behavior feature sequences.

In an example embodiment, the performing signaling blocking on the target UE includes: processing information about the signaling storm and information about the target UE as a security event, to perform signaling blocking based on a blocking policy of the security event.

A signaling storm blocking apparatus is further provided. The apparatus includes: an obtaining module, configured to obtain traffic statistics information, where the traffic statistics information is statistics and output information of a traffic performance indicator; a detection module, configured to detect a signaling storm based on the traffic statistics information, where the obtaining module is further configured to: when the signaling storm is detected, obtain a call history record CHR log of at least one user equipment UE, where the CHR log is a log file used to record a problem that occurs in a call process of a user; a determining module, configured to determine a target UE based on the CHR log of the at least one UE, where the target UE is a UE that generates signaling causing the signaling storm; and a blocking module, configured to perform signaling blocking on the target UE.

In an example embodiment, the blocking module is configured to: detect a false source in the target UE to obtain the false source in the target UE, where the false source is a UE that performs communication by using a false address; and perform signaling blocking on the false source in the target UE by using a blocking policy of a first priority, and perform signaling blocking on a non-false source in the target UE by using a blocking policy of a second priority, where the first priority is higher than the second priority.

In an example embodiment, the blocking module is configured to: obtain an international mobile subscriber identity IMSI of the target UE, page the target UE based on the IMSI of the target UE, and determine the false source in the target UE based on a paging result.

In an example embodiment, the traffic statistics information includes one or more of a traffic statistics log of a base station that is reported by the base station and a traffic statistics log that is of a core network and that is reported by a core network device. The CHR log of the at least one UE includes one or more of a signaling log that is of the at least one UE and that is reported by the base station and a signaling log that is of the at least one UE and that is reported by the core network device.

In an example embodiment, the CHR log of the at least one UE further includes an alarm log that is of the at least one UE and that is reported by a flow probe.

In an example embodiment, the determining module is configured to: extract a feature from the CHR log of the at least one UE; obtain, through analysis based on the extracted feature, a behavior feature sequence corresponding to each UE in the at least one UE; identify, by using a neural network model, the behavior feature sequence corresponding to each UE in the at least one UE; and when identifying an abnormal behavior feature sequence, use a UE corresponding to the abnormal behavior feature sequence as the target UE, where the neural network model is obtained through training by using the behavior feature sequence corresponding to a normal UE.

In an example embodiment, the determining module is further configured to: when target UEs corresponding to a plurality of abnormal behavior feature sequences exist, associate the target UEs corresponding to the plurality of abnormal behavior feature sequences.

In an example embodiment, the blocking module is configured to process information about the signaling storm and information about the target UE as a security event, to perform signaling blocking based on a blocking policy of the security event.

A signaling storm blocking device is further provided, and the device includes a memory and at least one processor. The memory stores at least one instruction or program, and the at least one instruction or program is loaded and executed by the at least one processor to implement any of the foregoing signaling storm blocking methods.

A computer-readable storage medium is further provided. The storage medium stores at least one instruction or program, and the instruction or program is loaded and executed by a processor to implement any of the foregoing signaling storm blocking methods.

Another communications apparatus is provided. The apparatus includes a transceiver, a memory, and a processor. The transceiver, the memory, and the processor communicate with each other through an internal connection path. The memory is configured to store instructions or a program. The processor is configured to execute the instructions or program stored in the memory, to control the transceiver to receive and send a signal. In addition, when the processor executes the instructions or program stored in the memory, the processor is enabled to perform the method in any one of the foregoing possible implementations. In an embodiment, the processor may communicate with the memory and the transceiver through a bus.

In an example embodiment, there are one or more processors, and there are one or more memories.

In an example embodiment, the memory may be integrated with the processor, or the memory is disposed independently of the processor.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

A computer program (product) is provided. The computer program (product) includes computer program code. When the computer program code is run on a computer, the computer is enabled to perform the methods in the foregoing aspects.

A chip is provided. The chip includes a processor, configured to invoke and run instructions or a program stored in a memory, so that a communications device on which the chip is installed performs the methods in the foregoing aspects.

Another chip is provided, including an input interface, an output interface, a processor, and a memory. The input interface, the output interface, the processor, and the memory are connected to each other through an internal connection path. The processor is configured to execute code in the memory. When the code is executed, the processor is configured to perform the methods in the foregoing aspects.

### BRIEF DESCRIPTION OF DRAWINGS

FIG. 1 is a schematic diagram of a structure of a communications system according to an example embodiment of this application;
FIG. 2 is a schematic diagram of an implementation environment according to an example embodiment of this application;
FIG. 3 is a flowchart of a signaling storm blocking method according to an example embodiment of this application;
FIG. 4 is a schematic diagram of a signaling storm detection process according to an embodiment of this application;
FIG. 5 is a schematic diagram of a target UE determining process according to an embodiment of this application;
FIG. 6 is a schematic diagram of a UE association process according to an embodiment of this application;
FIG. 7 is a schematic diagram of a signaling storm blocking process according to an embodiment of this application;
FIG. 8 is a schematic diagram of a structure of a signaling storm blocking apparatus according to an embodiment of this application; and
FIG. 9 is a schematic diagram of a structure of a signaling storm blocking device according to an embodiment of this application.

### DESCRIPTION OF EMBODIMENTS

Terms used in the embodiments of this application are only used to explain specific embodiments of this application, but are not intended to limit this application.

As there are more terminals , data services are significantly growing, and service requirements are increasingly diversified, there are demands for short delay, fast speed, and large traffic. If a quantity of terminal signaling requests received by a wireless network device (for example an MME or an eNodeB) exceeds a capability of processing all signaling by the wireless network device, network congestion is caused or even an avalanche effect is generated, and consequently the network is unavailable. This case is referred to as a signaling storm.

In a related technology, to reduce impact of a possible signaling storm on a normal service of a user, a CPU resource usage threshold/a signaling amount threshold per unit time is set in the wireless network device, a CPU usage and a quantity of signaling messages received per unit time or a service data volume received per unit time are counted, and whether traffic control is triggered is determined based on statistics data and the CPU resource usage threshold/the signaling amount threshold per unit time that is set. Traffic control includes but is not limited to two control manners: open-loop control and closed-loop control.

### Control manner 1: open-loop control

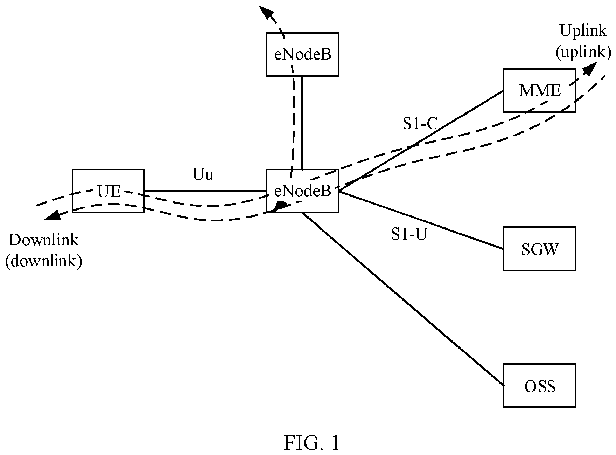

A communications system shown in FIG. 1 is used as an example for description. The communications system includes several types of devices: a user equipment (user equipment, UE), an eNodeB, an MME, a serving gateway (serving gateway, SGW), and an operation support system (operation support system, OSS).

The eNodeB is a radio base station in a Long Term Evolution (Long Term Evolution, LTE) network of a universal mobile communications technology, and is also a network element in the LTE radio access network. The eNodeB includes a radio resource management (radio resource management, RRM) function, and functions such as Internet Protocol (Internet Protocol, IP) header compression and user data flow encryption, MME selection when a UE is attached, paging information scheduling and transmission, broadcast information scheduling and transmission, and eNodeB measurement setting and providing.

The MME is a network element in the LTE network. The MME, the SGW, and a public data network gateway (public data network gateway, PGW) are jointly referred to as a 4G core network. The MME is a key control node in the LTE access network of the 3rd generation partnership project (3rd generation partnership project, 3GPP) protocol, and is responsible for locating a UE in an idle mode, and for a paging process of the UE, including performing relaying. In short, the MME is responsible for signaling processing, including functions such as access control, mobility management, attaching and detaching, session management, and SGW and PGW selection.

Main functions of the SGW include the following: During handover between eNodeBs, the SGW serves as a local anchor, and assists in completing a reordering function of the eNodeB. During handover between different access systems of 3GPP, the SGW serves as a mobility anchor and also has the reordering function. The SGW performs a lawful listening function, routes and forwards a data packet, and marks a packet on an uplink and downlink transport layer. In an idle state, the SGW buffering a downlink packet, and initiates a service request triggered by a network. The SGW is used for inter-operator charging, and so on.

The OSS has functions of operation support and preparation, service fulfillment, service assurance, and service usage.

In addition, there is a Uu interface between the UE and the eNodeB. There is a control plane interface between the eNodeB and the MME, which is usually referred to as S1-C. There is a user plane interface between the eNodeB and the SGW, which is usually referred to as S1-U. In the communications system shown in FIG. 1, cases in which a data flow on a control plane is overloaded, and the UE causes a DDoS include but are not limited to the following several cases:

1. Uplink signaling from the UE to the eNodeB (UE -> eNodeB): A large amount of access air-interface signaling generated by the UE causes overload of the eNodeB.

### 2. Uplink signaling from the eNodeB to the MME (eNodeB -> MME): The eNodeB sends excessive signaling, which causes overload of the MME

3. Downlink signaling from the MME to the eNodeB (MME -> eNodeB): The MME delivers excessive signaling, which causes overload of the eNodeB.

4. Signaling between eNodeBs (eNodeB <-> eNodeB): Excessive signaling or data between the eNodeBs leads to overload of the peer eNodeB.

### 5. Uplink signaling from the UE to the MME (UE -> MME): A large amount of excessive signaling generated by the UE causes overload of the MME

Cases in which a data flow on a user plane is overloaded, and the UE causes a DDoS include but are not limited to the following several cases:

1. Uplink service data from the UE to the eNodeB (UE -> eNodeB): A large amount of uplink air-interface data generated by the UE causes overload of the eNodeB.

2. Uplink service data from the eNodeB to the SGW (eNodeB -> SGW): The eNodeB sends excessive data, which causes overload of the SGW.

3. Downlink service data from the SGW to the eNodeB (SGW -> eNodeB): The SGW delivers excessive data, which causes overload of the eNodeB.

4. Service data between eNodeBs (eNodeB <-> eNodeB): Excessive signaling or data between the eNodeBs leads to overload of the peer eNodeB.

For the foregoing overload cases, open-loop control is to control traffic based on a quantity of received signaling messages or a received service data volume. For example, open-loop control includes but is not limited to traffic control based on a random access preamble (random access preamble), a radio resource control (radio resource control, RRC) connection request (connection request), a handover request (handover request), an RRC connection reestablishment request (connection reestablishment request), a paging (Paging), or a downlink data volume (downlink data volume). For example, the following several cases of open-loop control are used for description.

### MME overload-based traffic control

In the case of MME overload-based traffic control, traffic control may be started by using a CPU overload message. For example, when the MME is overloaded, the eNodeB is indicated by using an overload start (overload start) message to start traffic control, and a quantity of accessed UEs is limited based on an RRC access reason. After the MME overload is eliminated, the eNodeB is indicated by using an overload stop (overload stop) message to stop traffic control. For a related principle in a protocol, refer to the 3rd generation partnership project (3rd generation partnership project, 3GPP) technical support (Technical support, TS) 36.413 (R9/R10).

### Random access-based traffic control

A purpose of random access-based traffic control is to mitigate eNodeB overload caused by a large quantity of randomly accessed UEs. A large quantity of random access messages causes high system load, which results in a problem such as system reset. In the case of random access-based traffic control, random access may be refused based on a CPU threshold to control overload.

### Initial RRC access message-based traffic control

An initial RRC access message (Connection Request) is a start message of a procedure, for example, an S1 handover request (handover request) between the eNodeB and the MME or an X2 handover request (handover request) between eNodeBs. In the case of initial RRC access message-based traffic control, after an initial access message is successfully processed, a series of subsequent related processing is triggered, which causes large overheads to an entire system. Therefore, traffic may be controlled based on the initial RRC access message by using a quantity of requests per second, a CPU usage, a message priority, and the like, so that the traffic is controlled at a start stage of a signaling procedure, thereby reducing system load from the very beginning.

### Paging -based traffic control

A paging message is a start message of a procedure. After the paging message is successfully processed, a large quantity of users are triggered to access a network, which causes large overheads to an entire system. Therefore, in the case of paging message-based traffic control, traffic may be control based on a CPU threshold and a service priority, so that the traffic is controlled at a start stage of a signaling procedure, thereby reducing system load from the very beginning.

### Control manner 2: closed-loop control

Closed-loop control is to control traffic based on a CPU occupancy rate. The traffic control solution includes refusing initial access or switching of a low-priority service.

It is not difficult to learn that a CPU/signaling threshold is used in each of the several control manners to provide system protection on signaling overload. However, in a fifth-generation (fifth-generation, 5G) mobile communications system, base stations are deployed in high density, massive UEs are accessed in a massive machine type communication (massive machine type communication, mMTC) scenario, and a service is highly available in an ultra-reliable and low latency communication (ultra-reliable and low latency communication, URLLC) scenario. As a result, a hacker is prone to control a large quantity of UEs to form a botnet. The botnet continuously occupies a network element resource, and consequently performs a distributed denial of service attack (distributed denial of service attack, DDoS) on an operator network. For a signaling storm generated due to the DDoS, the foregoing control manner does not support DDoS detection. Consequently, a manner of blocking the signaling storm is not precise, and a blocking effect is poor.

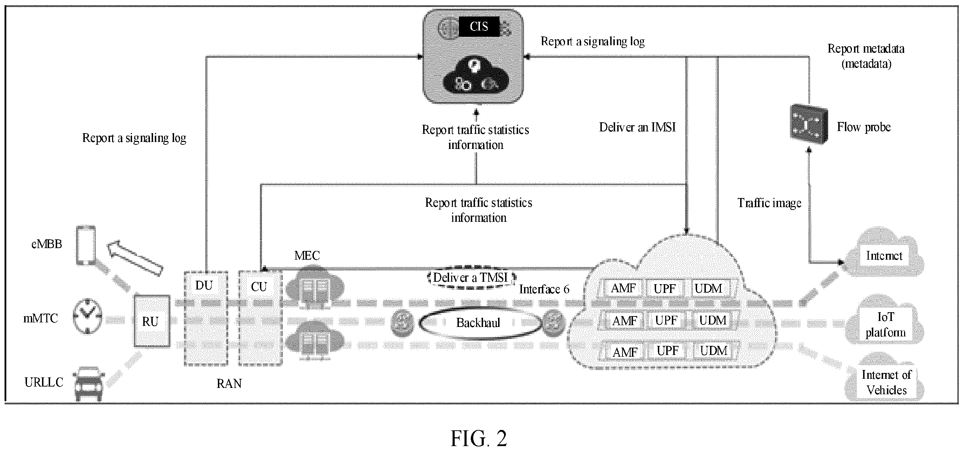

Therefore, the embodiments of this application provide a signaling storm blocking method. In this method, a signaling storm is detected based on traffic statistics information. When the signaling storm is detected, a target UE that generates signaling causing the signaling storm is determined based on a call history record (call history record, CHR) log of UE. Then, signaling blocking is performed on the target UE. In this way, the signaling storm is more accurately blocked and a blocking effect is improved. For example, the signaling storm blocking method is applied to an implementation environment shown in FIG. 2. The implementation environment includes a radio access network (radio access network, RAN) and a core (core) network. There is a backhaul (backhaul) between the core network and the RAN.

The RAN provides a connection between the UE and the core network. A RAN architecture is intended to establish a user plane. To establish the user plane, a signaling plane needs to be established. In the RAN architecture, a 5G base station (gNode) is configured to establish a signaling connection to the UE, transmit signaling to the core network, and establish a digital server. As shown in FIG. 2, the RAN includes two logical units: a centralized unit (centralized unit, CU) and a distributed unit (distributed unit, DU). The CU and the DU are internal structures of a gNode, and may be deployed together or separately deployed based on a scenario and a requirement. The CU has a packet data convergence protocol (packet data convergence protocol, PDCP) and an RRC function. The DU is a logical network element newly introduced into 5G, and has L2 and L1 functions.

The core network includes devices such as an access and mobility management network element (access and mobility management function, AMF), a user plane function (user plane function, UPF), and unified data management (unified data management, UDM).

As shown in FIG. 2, the implementation environment further includes three application scenarios: a resource unit (resource unit, RU), which provides an enhanced mobile broadband (enhanced mobile broadband, eMBB), a massive Internet of Things service (massive machine type communication, mMTC), and ultra-reliable and low latency communication (ultra-reliable and low latency communication, URLLC). An architecture evolved based on 5G further has a mobile edge computing (mobile edge computing, MEC) technology that deeply merges a mobile access network and an Internet service. In one aspect, MEC can improve user experience and save bandwidth resources. In another aspect, a computing capability is sunk to a mobile edge node to provide third-party application integration, thereby providing an infinite possibility for service innovation at a mobile edge entry. In addition, the core network may be further connected to the Internet (Internet), an Internet of Things (Internet of Things, IoT) platform, and the Internet of Vehicles.

As shown in FIG. 2, the implementation environment further includes a cybersecurity intelligence system (cybersecurity intelligence system, CIS). A flow probe is further connected between the CIS and the Internet, and the flow probe detects a traffic image of the Internet. The CIS may deliver an international mobile subscriber identity (international mobile subscriber identity, IMSI) to the core network, and the core network may deliver a temporary mobile subscriber identity (temporary mobile subscriber identity, TMSI) to the RAN.

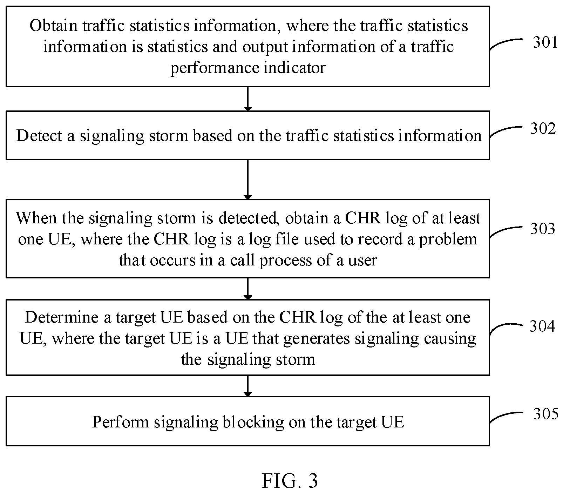

Using the implementation environment shown in FIG. 2 as an example, an embodiment of this application provides a signaling storm blocking method. In this method, a process of blocking a signaling storm by the CIS is used as an example. The base station and a core network device may report a signaling log and traffic statistics information to the CIS, and the flow probe may also report metadata (metadata), such as an alarm log of the UE, to the CIS. The CIS detects a signaling storm based on the received data, that is, detects a DDoS. After detecting the signaling storm, the CIS further determines a target UE that generates signaling causing the signaling storm, and performs signaling blocking on the target UE, to block the signaling storm. Referring to FIG. 3, the method includes the following steps 301 to 305.

### 301. Obtain traffic statistics information, where the traffic statistics information is statistics and output information of a traffic performance indicator.

The traffic statistics information may be applied to user behavior analysis, network trend analysis, capacity planning, fault locating, and another aspect. In the method provided in this embodiment of this application, before a signaling storm is blocked, the traffic statistics information is first obtained. A method for obtaining the traffic statistics information is not limited in this embodiment of this application. For example, as shown in FIG. 2, both the base station and the core network device may report the traffic statistics information to the CIS, and the CIS may detect the signaling storm based on the traffic statistics information reported by the base station and the core network device. In this case, the traffic statistics information obtained by the CIS includes one or more of a traffic statistics log of the base station that is reported by the base station and a traffic statistics log that is of the core network and that is reported by the core network device.

The traffic statistics log of the base station and the traffic statistics log of the core network include but are not limited to a total quantity of online UEs, a quantity of UEs in each state, and the like. In addition, because the base station uses an RRC protocol, and the core network uses a NAS protocol, the traffic statistics logs reported by the base station and the core network device are log feature fields selected from different protocols, for example, a CPU usage, a signaling procedure count, a quantity of attach requests, a quantity of service requests, a signaling frequency, and a quantity of accessed UEs. Content of the traffic statistics log is not limited in this embodiment of this application.

In addition, an opportunity for reporting the traffic statistics information by the base station and the core network device is not limited in this embodiment of this application, and the base station and the core network device may report the traffic statistics information periodically or in real time. After obtaining the traffic statistics information, the CIS can detect the signaling storm in real time or periodically.

### 302. Detect a signaling storm based on the traffic statistics information.

In an example embodiment, because the traffic statistics information obtained by the CIS includes a relatively large amount of content, in the method provided in this embodiment of this application, when the signaling storm is detected based on the traffic statistics information, preprocessing of the traffic statistics information is supported. Then, the signaling storm is detected based on preprocessed data. A preprocessing manner is not limited in this embodiment of this application. For example, preprocessing includes but is not limited to format conversion, character conversion, field reduction, and the like. For example, the preprocessed data is shown in the following Table 1.

**Table 1**

| Data Source | INPUT | Description |
|---|---|---|
| Core network device | CPU load value | CPU load value per minute on the core network device |
| | Quantity of signaling procedures | Total quantity of signaling procedures per unit time on the core network device |
| | Signaling procedure group count | Count of each signaling procedure type per unit time, for example, attach (attach), detach (detach), a full-service router (service router, SR), and a terminal access unit (terminal access unit, TAU) |
| | Total quantity of online UEs | Total quantity of online UEs |
| | Quantity of UEs in each state | Quantity of UEs in an idle (idle)/connected (connect) state per unit time |
| | Authentication procedure count | Total quantity of authentication procedures per unit time |
| | Quantity of successful authentications | Quantity of successful authentications per unit time, used to determine whether a home subscriber server (home subscriber server, HSS) is overloaded |

In Table 1, the preprocessed data includes the CPU load value, the quantity of signaling procedures, the signaling procedure group count, the total quantity of online UEs, the quantity of UEs in each state, the authentication procedure count, and the quantity of successful authentications. For detailed description of each piece of data, refer to Table 1 above. The HSS is a main user database that supports an IMS network entity configured to process invoking/a session. The HSS includes a user profile, performs identity authentication and authorization of a user, and may provide information about a physical location of the user.

In an example embodiment, that the signaling storm is detected based on the traffic statistics information includes but is not limited to the following: The signaling storm is detected based on the traffic statistics information through an isolation forest and time sequence prediction. For example, if data is preprocessed, the signaling storm is detected based on preprocessed data through the isolation forest and time sequence prediction.

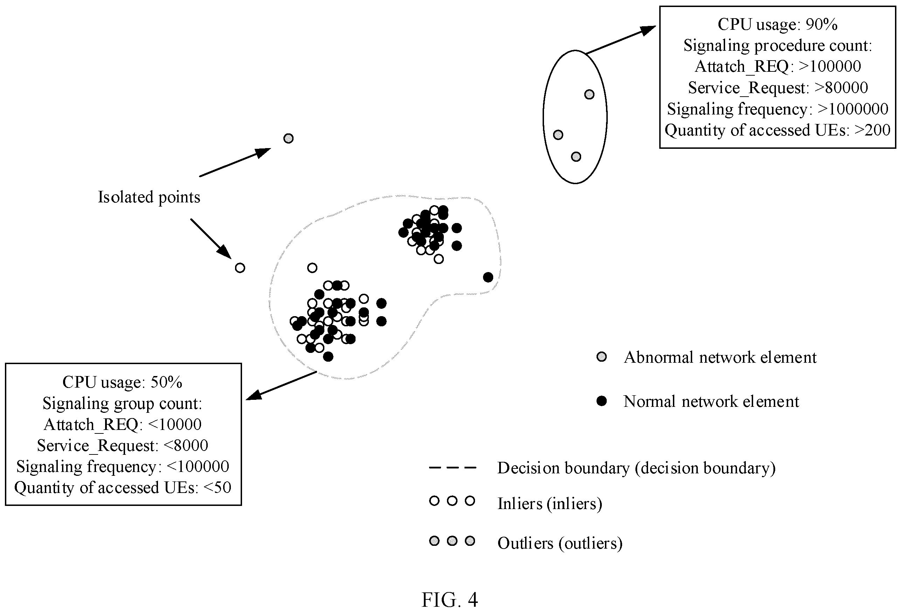

The isolation forest (isolation forest, iForest) is a fast anomaly detection method and has linear time complexity and high precision, and may be used for attack detection in network security. The iForest is applicable to anomaly detection on continuous numerical data (continuous numerical data), and an anomaly is defined as "isolated points more likely to be separated (more likely to be separated)", which can be understood as sparsely distributed points that are relatively far from a high-density group. Using statistics to explain the iForest, in data space, a sparse distribution area indicates that a probability of data occurrence in this area is very low, and therefore, it can be considered that data falling within the area is abnormal. For example, as shown in FIG. 4, after anomaly detection is performed based on the traffic statistics information through the isolated forest, an abnormal network element and a normal network element are determined. The abnormal network element is a network element attacked by the signaling storm. For example, as shown in FIG. 4, for the normal network element, a CPU usage is 50%, and in a signaling procedure count, a quantity of attach requests (attach REQ) is less than 10000, a quantity of service requests (Service request) is less than 8000, a signaling frequency is less than 100000, and a quantity of accessed UEs is less than 50. However, due to the signaling storm, for the abnormal network element, a CPU usage reaches 90%, and in a signaling procedure count, a quantity of attach requests (attach REQ) is greater than 100000, a quantity of service requests (Service request) is greater than 80000, a signaling frequency is greater than 1000000, and a quantity of accessed UEs is greater than 200.

### 303. When the signaling storm is detected, obtain a CHR log of at least one UE, where the CHR log is a log file used to record a problem that occurs in a call process of a user.

The CHR log is used to record the problem that occurs in the call process of the user, and may be used to locate a fault reason. For example, content in the CHR log includes but is not limited to one or more pieces of information such as an access time, access duration, a procedure count, a procedure group count, and a signaling procedure sequence that are of the UE. In the method provided in this embodiment of this application, a target UE that generates signaling causing the signaling storm is located based on the CHR log. Therefore, when the signaling storm is detected, the CHR log of the UE is obtained. A quantity of UEs is not limited in this embodiment of this application. A manner of obtaining the CHR log of the UE is not limited in this embodiment of this application either. For example, as shown in FIG. 2, the base station and the core network device may report the CHR log of the UE to the CIS, and there is at least one UE. For example, the CHR log of the at least one UE includes one or more of a signaling log that is of the at least one UE and that is reported by the core network device and a signaling log that is of the at least one UE and that is reported by the core network device.

In addition, in an example embodiment, the flow probe may report an alarm log of the UE to the CIS. In an example embodiment, the CHR log that is of the at least one UE and that is obtained by the CIS further includes the alarm log that is of the at least one UE and that is reported by the flow probe.

### 304. Determine a target UE based on the CHR log of the at least one UE, where the target UE is a UE that generates signaling causing the signaling storm.

In an example embodiment, when it is detected that a network element is attacked and the signaling storm is detected, that the target UE is determined based on the CHR log of the at least one UE includes: extracting a feature from the CHR log of the at least one UE; obtaining, through analysis based on the extracted feature, a behavior feature sequence corresponding to each UE in the at least one UE; identifying, by using a neural network model, the behavior feature sequence corresponding to each UE in the at least one UE; and using, when an abnormal behavior feature sequence is identified, a UE corresponding to the abnormal behavior feature sequence as the target UE, where the neural network model is obtained through training by using the behavior feature sequence corresponding to a normal UE.

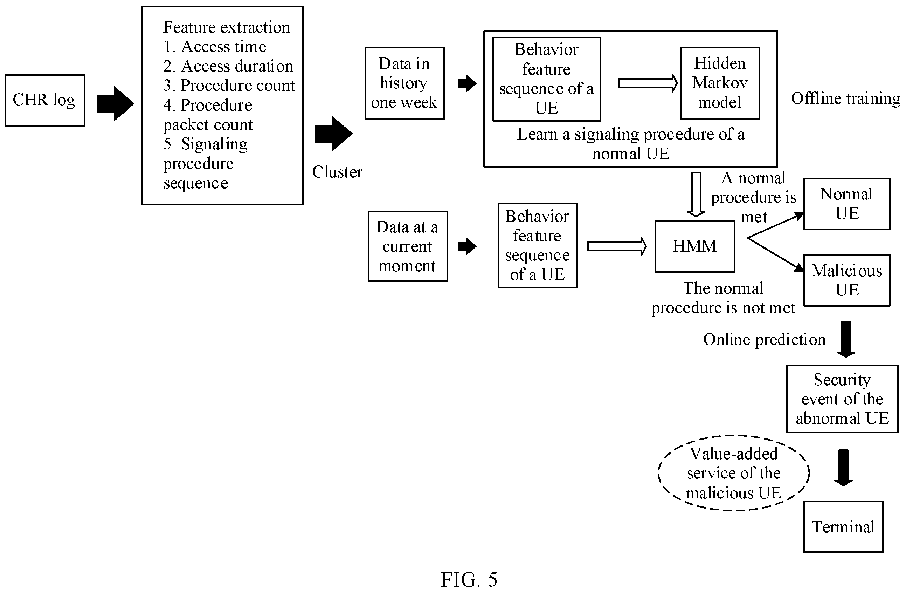

Before the identifying, by using a neural network model, the behavior feature sequence corresponding to each UE in the at least one UE, the method further includes: obtaining the neural network model used to identify the behavior feature sequence of the UE. A process of obtaining the neural network model and a type of the neural network model are not limited in this embodiment of this application. For example, as shown in FIG. 5, an example in which the CIS obtains the CHR log is used. The CHR log records related information of a user by using a log file. Features such as an access time, access duration, a procedure count, a procedure group count, a signaling procedure sequence, and a bandwidth of the UE may be obtained by extracting a feature from the CHR log.

An initial neural network model may be trained based on a feature extracted from a CHR log obtained in a history time period, and a length of the history time period may be set based on a scenario or experience. The length of the history time period is not limited in this embodiment of this application. For example, the history time period is history one week. A feature is extracted from a CHR log in the history one week, and is input to the initial neural network model. The initial neural network model learns the behavior feature sequence of the normal UE in reference duration. The reference duration may be set based on a scenario or experience. For example, the reference duration is five minutes. A process of learning a signaling procedure of the normal UE may be trained online. For example, the initial neural network model may be a hidden Markov model (hidden Markov model, HMM). A basic idea of the HMM is to establish a UE signaling procedure sequence state machine by learning signaling procedure sequences of a large quantity of normal UEs, and identify an abnormal UE by calculating a state conversion probability. The sequence state machine includes several states: a sequence anomaly, a packet technology anomaly, a time behavior anomaly, and a procedure technology anomaly.

When the signaling storm is detected, after the CHR log is obtained, the feature is extracted from the CHR log of the at least one UE, and the behavior feature sequence corresponding to each UE in the at least one UE is obtained through analysis based on the extracted feature. The behavior feature sequence of each UE that is obtained through analysis is input to the trained neural network model, and online detection is performed based on the neural network model. Using the HMM as an example, the HMM identifies whether the behavior feature sequence of the UE is normal, to determine whether the UE is a normal UE or a malicious UE. The malicious UE is a UE that generates signaling causing the signaling storm, that is, the target UE. For example, a UE whose behavior feature sequence meets a normal procedure is a normal UE, and a UE whose behavior feature sequence does not meet the normal procedure is a malicious UE. For example, in five-minute duration, if a behavior feature sequence corresponding to a UE is service request (12:00:14)-->service request (12:00:15)-->CN init detach (12:03:15)-->service request (12:03:20), the behavior feature sequence is a behavior feature sequence corresponding to a normal UE. Alternatively, if a behavior feature sequence corresponding to a UE is attach (12:05:06)-->TAU (12:05:07)-->TAU (12:05:07)-->TAU (12:05:08)-->attach (12:05:10)-->detach (12:05:15)-->TAU (12:05:33)-->detach (12:05:44), this behavior feature shows that in five minutes, the UE is frequently attached and detached. Therefore, the behavior feature sequence is an abnormal behavior feature sequence corresponding to an abnormal UE.

After the abnormal behavior feature sequence corresponding to the abnormal UE is detected, a security event of the abnormal UE, for example, a value-added service of the malicious UE, may be subsequently further determined, and the security event is pushed to a terminal.

For example, after the using, when an abnormal behavior feature sequence is identified, a UE corresponding to the abnormal behavior feature sequence as the target UE, the method further includes: when target UEs corresponding to a plurality of abnormal behavior feature sequences exist, associating the target UEs corresponding to the plurality of abnormal behavior feature sequences.

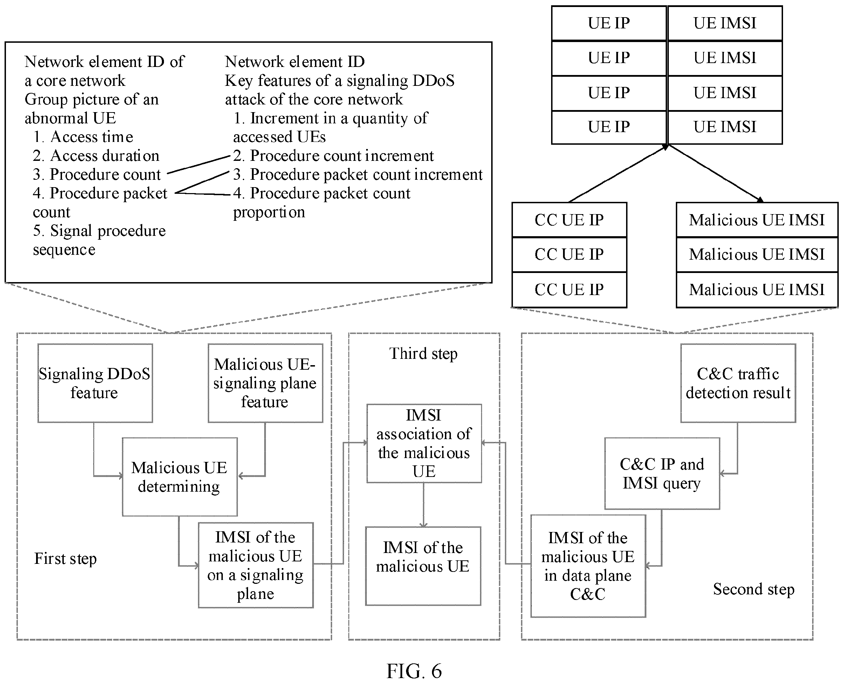

As shown in FIG. 6, when the signaling storm is detected, a feature of the determined target UE is content in a group picture of an abnormal UE in FIG. 6, and includes an access time, access duration, a procedure count, a procedure group count, and a signaling procedure sequence that are of the abnormal UE. When the signaling storm is detected, key features of a signaling DDoS attack of a core network attacked by the signaling storm include an increment in a quantity of accessed UEs, a procedure count increment, a procedure group count increment, and a procedure group count proportion. A signaling plane feature of the malicious UE may be obtained based on the group picture of the abnormal UE and the key feature of the signaling DDoS attack of the core network. The malicious UE is determined based on the group picture of the abnormal UE and the key feature of the signaling DDoS attack of the core network, to obtain an IMSI of the malicious UE on a signaling plane. In addition, an IP of an alarmed UE may be determined based on the alarm log reported by the flow probe. After the IMSI of the malicious UE on the signaling plane is obtained, because the CHR log records a relationship between an IP and an IMSI, an IMSI of the malicious UE in data plane C&C is obtained based on a control and command (C&C) traffic detection result through IP and IMSI query in C&C (that is, the IMSI of the malicious UE is obtained through CC UE IP query). The IMSI of the malicious UE is determined by associating the IMSI of the malicious UE on the signaling plane with the IMSI of the malicious UE in the data plane C&C.

It should be noted that in FIG. 6, only that the flow probe reports alarm information of the UE is used as an example. When the CIS does not obtain the alarm information that is of the UE and that is reported by the flow probe, execution of the second step in FIG. 6 may be omitted, and the IMSI of the malicious UE is directly determined by using the first and second steps.

### 305. Perform signaling blocking on the target UE.

In an example embodiment, that signaling blocking is performed on the target UE includes: processing information about the signaling storm and information about the target UE as a security event, to perform signaling blocking based on a blocking policy of the security event.

The blocking policy of the security event is not limited inn this embodiment of this application. For example, an encapsulated security event is pushed, so that after monitoring the security event, an operation and maintenance monitoring employee manually deliver a blocking command to block the target UE in the security event.

In another example embodiment, a blocking interface of the core network may be invoked, for example, the blocking interface may be an interface 6 shown in FIG. 2. The interface 6 of the core network is invoked to deliver an IMSI to the core network to perform blocking. The core network delivers, based on a relationship between an IMSI and a TMSI and to a radio base station for air-interface blocking, a TMSI of the target UE that generates the signaling causing the signaling storm.

In addition, different security events may have different blocking policies. Because the target UE that generates the signaling causing the signaling storm may be a false source for a DDoS, a blocking priority of this type of target UE needs to be higher. Therefore, this embodiment of this application includes blocking different types of target UEs by using different blocking priorities. For example, that signaling blocking is performed on the target UE includes: detecting a false source in the target UE to obtain the false source in the target UE, where the false source is a UE that performs communication by using a false address; and performing signaling blocking on the false source in the target UE by using a blocking policy of a first priority, and performing signaling blocking on a non-false source in the target UE by using a blocking policy of a second priority, where the first priority is higher than the second priority.

In an example embodiment, the detecting a false source in the target UE to obtain the false source in the target UE includes: obtaining an IMSI of the target UE, paging the target UE based on the IMSI of the target UE, and determining the false source in the target UE based on a paging result. For example, when the target UE is paged based on the IMSI of the target UE, if the paging result is that paging succeeds, the target UE is a non-false source; or if the paging result is that paging fails, the target UE is a false source.

In conclusion, according to the method provided in this embodiment of this application, the signaling storm is detected by using the traffic statistics information. When the signaling storm is detected, the target UE that generates the signaling causing the signaling storm is determined based on the CHR log of the UE, and signaling blocking is performed on the target UE. In this way, the signaling storm is more accurately blocked and a blocking effect is improved. In addition, whether the determined target UE is a false source is further determined, to perform blocking by using different priorities, thereby further improving a blocking effect.

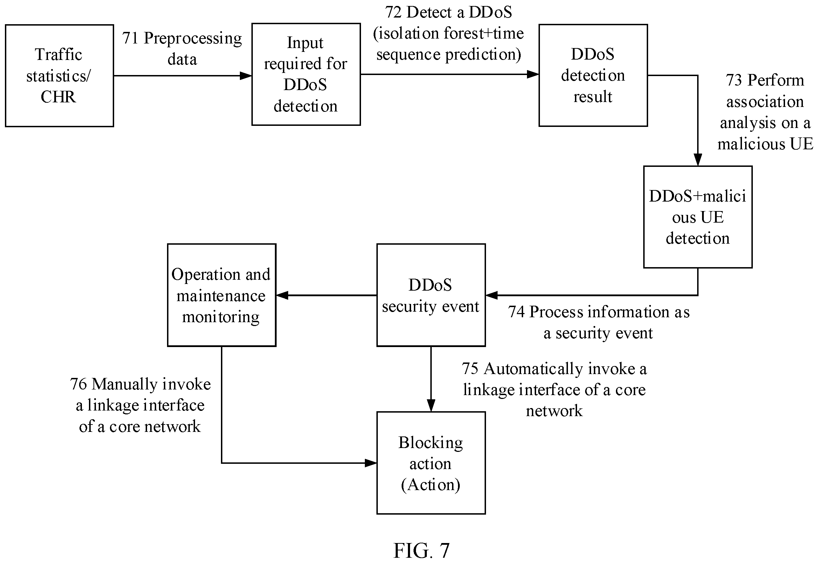

For the foregoing signaling storm blocking process, refer to FIG. 7. As shown in FIG. 7, that a CIS is an execution body is used as an example, and the signaling storm blocking process includes steps 71 to 76. In step 71, the CIS obtains traffic statistics/a CHR log, and preprocesses data in the traffic statistics/CHR log to obtain input data required for detecting a DDoS. In step 72, the CIS detects the DDoS by using a neural network model to obtain a DDoS detection result, that is, monitors whether a signaling storm is generated. In step 73, when detecting the signaling storm, the CIS performs association analysis on UE based on a signaling feature of the signaling storm and the CHR log of the UE, to determine a target UE that generates signaling causing the signaling storm, that is, a malicious UE. In addition, for example, the CIS may further detect a false source in the malicious UE to determine the false source in the malicious UE. In step 74, the CIS processes information about the signaling storm and information about the malicious UE as a DDoS security event, to perform signaling blocking based on a blocking policy of the security event. For example, in step 75, the CIS automatically invokes a linkage interface of a core network to perform a blocking operation; or in step 76, the CIS pushes the security event to an operation and maintenance monitoring end through event reporting, and an operation and maintenance monitoring employee manually invokes a linkage interface of a core network to perform a blocking operation to block the signaling storm.

It should be noted that, only the system shown in FIG. 2 is used as an example in this embodiment of this application to describe the signaling storm blocking method provided in the embodiments of this application, but a scenario to which the method provided in the embodiments of this application is applied is not limited. In addition to the system shown in FIG. 2 and the protocol in the system shown in FIG. 2, the method may be further applied to interaction between other protocols. In other words, the protocol in the method provided in the embodiments of this application may be flexibly extended.

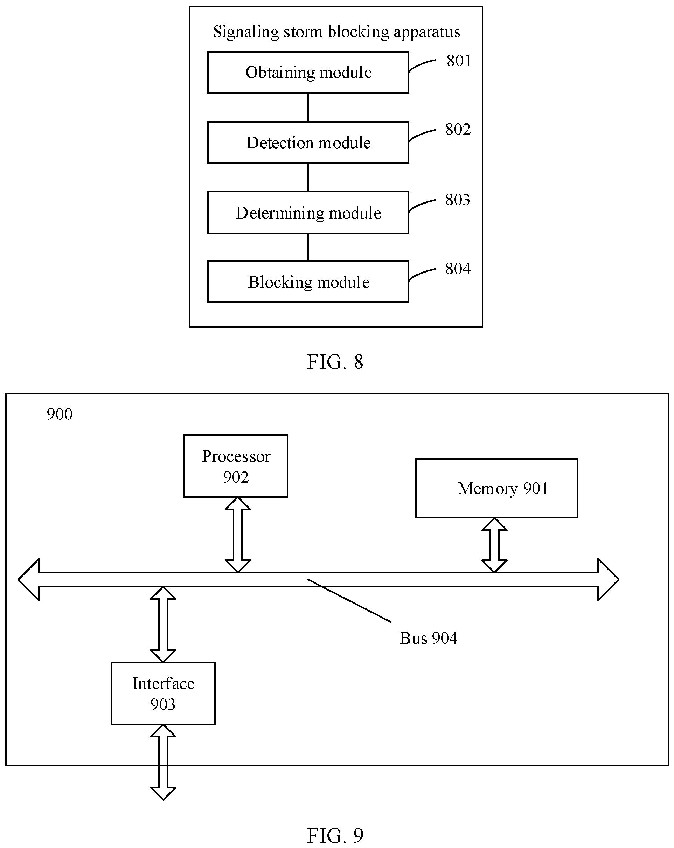

An embodiment of this application further provides a signaling storm blocking apparatus. Referring to FIG. 8, the signaling storm blocking apparatus includes an obtaining module 801, a detection module 802, a determining module 803, and a blocking module 804.

The obtaining module 801 is configured to obtain traffic statistics information, where the traffic statistics information is statistics and output information of a traffic performance indicator.

The detection module 802 is configured to detect a signaling storm based on the traffic statistics information.

The obtaining module 801 is further configured to: when the signaling storm is detected, obtain a call history record CHR log of at least one user equipment UE, where the CHR log is a log file used to record a problem that occurs in a call process of a user.

The determining module 803 is configured to determine a target UE based on the CHR log of the at least one UE, where the target UE is a UE that generates signaling causing the signaling storm.

The blocking module 804 is configured to perform signaling blocking on the target UE.

In an example embodiment, the blocking module 804 is configured to: detect a false source in the target UE to obtain the false source in the target UE, where the false source is a UE that performs communication by using a false address; and perform signaling blocking on the false source in the target UE by using a blocking policy of a first priority, and perform signaling blocking on a non-false source in the target UE by using a blocking policy of a second priority, where the first priority is higher than the second priority.

In an example embodiment, the blocking module 804 is configured to: obtain an international mobile subscriber identity IMSI of the target UE, page the target UE based on the IMSI of the target UE, and determine the false source in the target UE based on a paging result.

In an example embodiment, the traffic statistics information includes one or more of a traffic statistics log of a base station that is reported by the base station and a traffic statistics log that is of a core network and that is reported by a core network device. The CHR log of the at least one UE includes one or more of a signaling log that is of the at least one UE and that is reported by the base station and a signaling log that is of the at least one UE and that is reported by the core network device.

In an example embodiment, the CHR log of the at least one UE further includes an alarm log that is of the at least one UE and that is reported by a flow probe.

In an example embodiment, the determining module 803 is configured to: extract a feature from the CHR log of the at least one UE; obtain, through analysis based on the extracted feature, a behavior feature sequence corresponding to each UE in the at least one UE; identify, by using a neural network model, the behavior feature sequence corresponding to each UE in the at least one UE; and when identifying an abnormal behavior feature sequence, use a UE corresponding to the abnormal behavior feature sequence as the target UE, where the neural network model is obtained through training by using the behavior feature sequence corresponding to a normal UE.

In an example embodiment, the determining module 803 is further configured to: when target UEs corresponding to a plurality of abnormal behavior feature sequences exist, associate the target UEs corresponding to the plurality of abnormal behavior feature sequences.

In an example embodiment, the blocking module 804 is configured to process information about the signaling storm and information about the target UE as a security event, to perform signaling blocking based on a blocking policy of the security event.

According to the apparatus provided in this embodiment of this application, the signaling storm is detected by using the traffic statistics information. When the signaling storm is detected, the target UE that generates the signaling causing the signaling storm is determined based on the CHR log of the UE, and signaling blocking is performed on the target UE. In this way, the signaling storm is more accurately blocked and a blocking effect is improved.

In addition, whether the determined target UE is a false source is further determined, to perform blocking by using different priorities, thereby further improving a blocking effect.

It should be understood that, when the apparatus provided in FIG. 8 implements functions of the apparatus, division into the foregoing functional modules is merely used as an example for description. During actual application, the foregoing functions may be allocated to different functional modules for implementation based on a requirement. In other words, a device is divided into different functional modules in terms of an inner structure, to implement all or some of the functions described above. In addition, the apparatus provided in the foregoing embodiment and the method embodiments pertain to a same idea. For a specific implementation process of the apparatus, refer to the method embodiments. Details are not described herein again.

Referring to FIG. 9, an embodiment of this application further provides a signaling stormblocking device 900. The signaling storm blocking device 900 shown in FIG. 9 is configured to perform operations in the foregoing signaling storm blocking method. The signaling storm blocking device 900 includes a memory 901, a processor 902, and an interface 903. The memory 901, the processor 902, and the interface 903 are connected through a bus 904.

The memory 901 stores at least one instruction, and the at least one instruction is loaded and executed by the processor 902, to implement the foregoing signaling storm blocking method.

The interface 903 is used for communication with another device in a network. The interface 903 may implement communication in a wireless or wired manner. For example, the interface 903 may be a network adapter.

It should be understood that FIG. 9 shows only a simplified design of the signaling storm blocking device 900. In actual application, the signaling storm blocking device may include any quantity of interfaces, processors, or memories. In addition, the processor may be a central processing unit (Central Processing Unit, CPU), or may be another general-purpose processor, a digital signal processor (digital signal processor, DSP), an application-specific integrated circuit (application-specific integrated circuit, ASIC), afield-programmable gate array (field-programmable gate array, FPGA), or another programmable logic device, a discrete gate or transistor logic device, a discrete hardware component, or the like. The general-purpose processor may be a microprocessor, any conventional processor, or the like. It should be noted that the processor may be a processor that supports an advanced reduced instruction set computing machine (advanced RISC machines, ARM) architecture.

Further, in an optional embodiment, the memory may include a read-only memory and a random access memory, and provide instructions and data for the processor. The memory may further include a nonvolatile random access memory. For example, the memory may further store information about a device type.

The memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example but not limitation, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM)

It should be understood that when the device provided in FIG. 9 implements a function of the device, for a specific implementation process, refer to the method embodiment. Details are not described herein again.

A computer-readable storage medium is further provided. The storage medium stores at least one instruction, and the instruction is loaded and executed by a processor, to implement the signaling storm blocking method in any one of the foregoing method embodiments.

This application provides a computer program. When the computer program is executed by a computer, a processor or the computer may be enabled to perform corresponding operations and/or procedures in the foregoing method embodiments.

All or some of the foregoing embodiments may be implemented by using software, hardware, firmware, or any combination thereof. When software is used to implement the embodiments, all or some of the foregoing embodiments may be implemented in a form of a computer program product. The computer program product includes one or more computer instructions. When the computer program instructions are loaded and executed on a computer, the procedures or functions according to this application are all or partially generated. The computer may be a general-purpose computer, a dedicated computer, a computer network, or another programmable apparatus. The computer instructions may be stored in the computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid state disk)), or the like.

The foregoing descriptions are embodiments of this application, but are not intended to limit this application. Any modification, equivalent replacement, improvement, or the like made without departing from the principle of this application should fall within the protection scope of this application.

## Claims

1. A signaling storm blocking method, wherein the method comprises:
obtaining traffic statistics information, wherein the traffic statistics information is statistics information of a traffic performance indicator;
detecting a signaling storm based on the traffic statistics information;
when the signaling storm is detected, obtaining a call history record CHR log of at least one user equipment UE, wherein the CHR log is a log file used to record a problem that occurs in a call process of a user;
determining a target UE based on the CHR log of the at least one UE, wherein the target UE is a UE that generates signaling causing the signaling storm; and
performing signaling blocking on the target UE.

2. The method according to claim 1, wherein the performing signaling blocking on the target UE comprises:
detecting a false source in the target UE to obtain the false source in the target UE, wherein the false source is a UE that performs communication by using a false address; and
performing signaling blocking on the false source in the target UE by using a blocking policy of a first priority, and performing signaling blocking on a non-false source in the target UE by using a blocking policy of a second priority, wherein the first priority is higher than the second priority.

3. The method according to claim 2, wherein the detecting a false source in the target UE to obtain the false source in the target UE comprises:
obtaining an international mobile subscriber identity IMSI of the target UE, paging the target UE based on the IMSI of the target UE, and determining the false source in the target UE based on a paging result.

4. The method according to any one of claims 1 to 3, wherein the traffic statistics information comprises one or more of a traffic statistics log of a base station that is reported by the base station and a traffic statistics log that is of a core network and that is reported by a core network device; and
the CHR log of the at least one UE comprises one or more of a signaling log that is of the at least one UE and that is reported by the base station and a signaling log that is of the at least one UE and that is reported by the core network device.

5. The method according to claim 4, wherein the CHR log of the at least one UE further comprises an alarm log that is of the at least one UE and that is reported by a flow probe.

6. The method according to any one of claims 1 to 5, wherein the determining a target UE based on the CHR log of the at least one UE comprises:
extracting a feature from the CHR log of the at least one UE;
obtaining, through analysis based on the extracted feature, a behavior feature sequence corresponding to each UE in the at least one UE;
identifying, by using a neural network model, the behavior feature sequence corresponding to each UE in the at least one UE; and
using, when an abnormal behavior feature sequence is identified, a UE corresponding to the abnormal behavior feature sequence as the target UE, wherein the neural network model is obtained through training by using the behavior feature sequence corresponding to a normal UE.

7. The method according to claim 6, after the using, when an abnormal behavior feature sequence is identified, a UE corresponding to the abnormal behavior feature sequence as the target UE, the method further comprises:
when target UEs corresponding to a plurality of abnormal behavior feature sequences exist, associating the target UEs corresponding to the plurality of abnormal behavior feature sequences.

8. The method according to any one of claims 1 to 7, wherein the performing signaling blocking on the target UE comprises:
processing information about the signaling storm and information about the target UE as a security event, to perform signaling blocking based on a blocking policy of the security event.

9. A signaling storm blocking apparatus, wherein the apparatus comprises:
an obtaining module, configured to obtain traffic statistics information, wherein the traffic statistics information is statistics and output information of a traffic performance indicator;
a detection module, configured to detect a signaling storm based on the traffic statistics information, wherein
the obtaining module is further configured to: when the signaling storm is detected, obtain a call history record CHR log of at least one user equipment UE, wherein the CHR log is a log file used to record a problem that occurs in a call process of a user;
a determining module, configured to determine a target UE based on the CHR log of the at least one UE, wherein the target UE is a UE that generates signaling causing the signaling storm; and
a blocking module, configured to perform signaling blocking on the target UE.

10. The apparatus according to claim 9, wherein the blocking module is configured to: detect a false source in the target UE to obtain the false source in the target UE, wherein the false source is a UE that performs communication by using a false address; and perform signaling blocking on the false source in the target UE by using a blocking policy of a first priority, and perform signaling blocking on a non-false source in the target UE by using a blocking policy of a second priority, wherein the first priority is higher than the second priority.

11. The apparatus according to claim 10, wherein the blocking module is configured to: obtain an international mobile subscriber identity IMSI of the target UE, page the target UE based on the IMSI of the target UE, and determine the false source in the target UE based on a paging result.

12. The apparatus according to any one of claims 9 to 11, wherein the traffic statistics information comprises one or more of a traffic statistics log of a base station that is reported by the base station and a traffic statistics log that is of a core network and that is reported by a core network device; and
the CHR log of the at least one UE comprises one or more of a signaling log that is of the at least one UE and that is reported by the base station and a signaling log that is of the at least one UE and that is reported by the core network device.

13. The apparatus according to claim 12, wherein the CHR log of the at least one UE further comprises an alarm log that is of the at least one UE and that is reported by a flow probe.

14. The apparatus according to any one of claims 9 to 13, wherein the determining module is configured to:
extract a feature from the CHR log of the at least one UE; obtain, through analysis based on the extracted feature, a behavior feature sequence corresponding to each UE in the at least one UE; identify, by using a neural network model,
the behavior feature sequence corresponding to each UE in the at least one UE; and when identifying an abnormal behavior feature sequence, use a UE corresponding to the abnormal behavior feature sequence as the target UE,
wherein the neural network model is obtained through training by using the behavior feature sequence corresponding to a normal UE.

15. The apparatus according to claim 14, wherein the determining module is further configured to: when target UEs corresponding to a plurality of abnormal behavior feature sequences exist, associate the target UEs corresponding to the plurality of abnormal behavior feature sequences.

16. The apparatus according to any one of claims 9 to 15, wherein the blocking module is configured to process information about the signaling storm and information about the target UE as a security event, to perform signaling blocking based on a blocking policy of the security event.

17. A signaling storm blocking device, wherein the device comprises:
a memory and at least one processor, wherein the memory stores at least one instruction, and the at least one instruction is loaded and executed by the at least one processor to implement the signaling storm blocking method according to any one of claims 1 to 8.

18. A computer-readable storage medium, wherein the storage medium stores at least one instruction, and a processor loads and executes the instruction to implement the signaling storm blocking method according to any one of claims 1 to 8.
